# EUROPÄISCHE PATENTSCHRIFT

(11) **EP 3 644 143 B1**
(45) Veröffentlichungstag und Bekanntmachung des Hinweises auf die Patenterteilung: **23.12.2020**
(21) Anmeldenummer: 18202937.1
(22) Anmeldetag: 26.10.2018
(51) Int. Cl.: G05B 19/042

(54) **SICH SELBST PARAMETRIERENDE PERIPHERIEBAUGRUPPE**
SELF-PARAMATERISATION PERIPHERAL MODULE
ENSEMBLE PÉRIPHÉRIQUE À PARAMÉTRAGE AUTOMATIQUE

(43) Veröffentlichungstag der Anmeldung: 29.04.2020
(73) Patentinhaber: Siemens Aktiengesellschaft, 80333 München (DE)
(72) Erfinder: Haritounian, Sevan, 76229 Karlsruhe (DE)

(56) Entgegenhaltungen:
- EP-A1- 2 704 326
- US-A- 5 848 609
- US-A1- 2005 151 624

## Beschreibung

Die vorliegende Erfindung geht aus von einem Betriebsverfahren für eine Peripheriebaugruppe einer speicherprogrammierbaren Steuerung,
- wobei die Peripheriebaugruppe über einen Anschluss der Peripheriebaugruppe ein Versorgungspotenzial und hiermit verbunden einen zugehörigen Versorgungsstrom an eine an die Peripheriebaugruppe angeschlossene Feldeinheit ausgibt,
- wobei das Versorgungspotenzial in einem Normalbetrieb einen Basisspannungswert aufweist und hiermit verbunden der Versorgungsstrom einen Basisstromwert aufweist,
- wobei die Peripheriebaugruppe von Zeit zu Zeit vom Normalbetrieb in einen Prüfbetrieb übergeht, in dem die Peripheriebaugruppe
   -- durch Ansteuern einer dem Anschluss innerhalb der Peripheriebaugruppe vorgeordneten Schalteinrichtung für eine definierte gültige Zeitspanne das Versorgungspotenzial vom Basisspannungswert auf einen modifizierten Spannungswert ändert,
   -- prüft, ob nach Ablauf der definierten Zeitspanne eine durch das Modifizieren des Versorgungspotenzials erwartete Änderung eingetreten ist,
   -- bei Eintreten der erwarteten Änderung wieder in den Normalbetrieb übergeht und
   -- bei Nichteintreten der erwarteten Änderung in einen Alarmbetrieb übergeht,
- wobei die Peripheriebaugruppe im Alarmbetrieb eine Alarmmeldung an eine Zentraleinheit der speicherprogrammierbaren Steuerung ausgibt und/oder über Ausgänge der Peripheriebaugruppe an die Peripheriebaugruppe angeschlossene Aktoren in einen sicheren Zustand überführt,
- wobei die Peripheriebaugruppe im Rahmen der Inbetriebnahme der Peripheriebaugruppe vor dem Normalbetrieb zunächst in einen Kalibrierbetrieb übergeht. Die vorliegende Erfindung geht weiterhin aus von einer Peripheriebaugruppe einer speicherprogrammierbaren Steuerung,
- wobei die Peripheriebaugruppe einen Anschluss aufweist, über den die Peripheriebaugruppe ein Versorgungspotenzial und hiermit verbunden einen zugehörigen Versorgungsstrom an eine an die Peripheriebaugruppe angeschlossene Feldeinheit ausgibt,
- wobei die Peripheriebaugruppe einen Controller aufweist, der die Peripheriebaugruppe zumindest in einem Normalbetrieb, einem Prüfbetrieb, einem Alarmbetrieb und einem Kalibrierbetrieb betreiben kann,
- wobei der Controller die Peripheriebaugruppe derart betreibt, dass das Versorgungspotenzial im Normalbetrieb einen Basisspannungswert aufweist und hiermit verbunden der Versorgungsstrom einen Basisstromwert aufweist,
- wobei der Controller die Peripheriebaugruppe von Zeit zu Zeit vom Normalbetrieb in den Prüfbetrieb überführt,
- wobei der Controller im Prüfbetrieb
   -- durch Ansteuern einer dem Anschluss innerhalb der Peripheriebaugruppe vorgeordneten Schalteinrichtung für eine definierte gültige Zeitspanne das Versorgungspotenzial vom Basisspannungswert auf einen modifizierten Spannungswert ändert,
   -- prüft, ob nach Ablauf der definierten Zeitspanne eine durch das Modifizieren des Versorgungspotenzials erwartete Änderung eingetreten ist,
   -- bei Eintreten der erwarteten Änderung die Peripheriebaugruppe wieder in den Normalbetrieb überführt und
   -- bei Nichteintreten der erwarteten Änderung die Peripheriebaugruppe in den Alarmbetrieb überführt,
- wobei der Controller im Alarmbetrieb eine Alarmmeldung an eine Zentraleinheit der speicherprogrammierbaren Steuerung ausgibt und/oder über Ausgänge der Peripheriebaugruppe an die Peripheriebaugruppe angeschlossene Aktoren in einen sicheren Zustand überführt,
- wobei der Controller die Peripheriebaugruppe im Rahmen der Inbetriebnahme der Peripheriebaugruppe vor dem Normalbetrieb zunächst im Kalibrierbetrieb betreibt.

Bei Peripheriebaugruppen von speicherprogrammierbaren Steuerungen müssen im Rahmen der Inbetriebnahme oftmals verschiedene Parameter eingestellt werden. Insbesondere müssen bei fehlersicheren Peripheriebaugruppen im Vergleich zu nicht fehlersicheren Peripheriebaugruppen weitere, zusätzliche Parameter eingestellt werden, die bei nicht fehlersicheren Peripheriebaugruppen nicht erforderlich sind.

Um die Betriebssicherheit zu erhöhen und auftretende Fehler rechtzeitig zu erkennen, überprüfen sich beispielsweise viele sichere Peripheriebaugruppen von Zeit zu Zeit selbst. Die Zykluszeit zwischen zwei derartigen Überprüfungen kann der Peripheriebaugruppe von einer Bedienperson vorgegeben werden. Sie liegt in der Regel im Bereich von etlichen Sekunden, oftmals auch darüber im Minuten-, Stunden- oder Tagebereich.

Bei der Prüfung selbst muss unterschieden werden, ob es sich bei der an den Anschluss angeschlossenen Feldeinheit um einen Aktor oder einen Sensor handelt.

Im Falle eines Aktors weist das an dem Anschluss anliegende Versorgungspotenzial im Normalbetrieb den Basisspannungswert auf. Es muss aber überprüft werden, ob bei einer Änderung des Versorgungspotenzials auf den modifizierten Spannungswert - wenn der Aktor also umgeschaltet werden soll - der Aktor entsprechend reagiert. Zumindest muss überprüft werden, ob der modifizierte Spannungswert tatsächlich an den Ausgang angeschaltet wird. Um diese Überprüfung vornehmen zu können, muss die Bedienperson zum einen den Basisspannungswert und den modifizierten Spannungswert spezifizieren. Weiterhin muss die Bedienperson im Stand der Technik spezifizieren, für welche Zeitspanne der modifizierte Spannungswert an den Ausgang angeschaltet werden soll. Denn je nach konkreter Konfiguration - beispielsweise Art des Aktors, dessen Induktivität, dessen Kapazität und insbesondere der Länge der Verbindungsleitungen vom Anschluss zum Aktor - kann es verschieden lang dauern, bis das Ansteuern der vorgeordneten Schalteinrichtung tatsächlich eine messbare Änderung des Versorgungspotenzials vom Basisspannungswert auf den modifizierten Spannungswert, eine Änderung des Stromflusses und/oder ein Ansprechen des Aktors bewirkt.

Es ist zwar möglich, die Zeitspanne mit einem maximal möglichen Wert (beispielsweise 2 Sekunden) zu spezifizieren und dadurch die Zeitspanne fest einzustellen. Dies würde jedoch dazu führen, dass der modifizierte Spannungswert für eine nennenswerte Zeitspanne, die im Einzelfall oftmals viel zu groß bemessen ist, an den Aktor ausgegeben wird. Insbesondere würde sie oftmals dazu führen, dass der Aktor tatsächlich auf die Änderung des Versorgungspotenzials reagiert. Die Zeitspanne sollte daher so klein wie möglich sein. Bei einem relativ trägen Aktor kann beispielsweise ein kurzzeitiges Umschalten vom Basisspannungswert auf den modifizierten Spannungswert zwar einerseits gemessen werden, so dass geprüft werden kann, dass die vorgeordnete Schalteinrichtung ordnungsgemäß funktioniert. Andererseits kann aufgrund der Trägheit des Aktors beispielsweise erreicht werden, dass dieser während der definierten Zeitspanne noch gar nicht reagiert hat. Dadurch kann die vorgeordnete Schalteinrichtung geprüft werden, ohne dass der Aktor tatsächlich reagiert. Auch wenn der Aktor tatsächlich reagiert, bleibt dennoch die Auswirkung auf den gesteuerten Prozess oftmals klein genug, sofern auch die Zeitspanne klein genug ist.

Im Falle eines Sensors weist das an dem Anschluss anliegende Versorgungspotenzial im Normalbetrieb stets den Basisspannungswert auf. Es muss aber überprüft werden, ob der Sensor auf das von ihm zu erfassende Signal entsprechend reagieren kann. Um diese Überprüfung vornehmen zu können, muss die Bedienperson im Stand der Technik ebenfalls spezifizieren, für welche Zeitspanne der modifizierte Spannungswert an den Ausgang angeschaltet werden soll. Denn je nach konkreter Konfiguration - beispielsweise Art des Sensors, dessen Induktivität, dessen Kapazität und insbesondere der Länge der Verbindungsleitungen vom Anschluss zum Sensor - kann es verschieden lang dauern, bis das Ansteuern der vorgeordneten Schalteinrichtung tatsächlich eine messbare Änderung des Versorgungspotenzials vom Basisspannungswert auf den modifizierten Spannungswert, eine Änderung des Stromflusses oder ein Ansprechen des Sensors bewirkt.

Es ist auch hier möglich, die Zeitspanne mit einem maximal möglichen Wert (beispielsweise 2 Sekunden) zu spezifizieren und dadurch die Zeitspanne fest einzustellen. Dies würde jedoch dazu führen, dass der modifizierte Spannungswert für eine nennenswerte Zeitspanne, die im Einzelfall oftmals viel zu groß bemessen ist, an den Sensor ausgegeben wird. Insbesondere würde dies oftmals dazu führen, dass der Sensor während dieser Zeitspanne nicht auf das von ihm eigentlich zu erfassende Signal selbst reagieren kann. Die Zeitspanne sollte daher so klein wie möglich sein.

In manchen Fällen stehen der Bedienperson Datenblätter oder dergleichen zur Verfügung, anhand derer die Bedienperson die Zeitspanne bestimmen oder zumindest eingrenzen kann. Die Zeitspanne hängt jedoch, wie bereits erwähnt, insbesondere auch von der Länge der Verbindungsleitungen zwischen dem Anschluss und der Feldeinheit ab. Insbesondere diese Länge ist in aller Regel nicht vorab bekannt. Sogar mit Datenblättern oder dergleichen muss die Bedienperson daher oftmals durch wiederholte Versuche herausfinden, welchen Wert sie für die Zeitspanne sinnvollerweise ansetzt. Diese Vorgehensweise ist zum einen zeitaufwendig und damit auch kostenintensiv und zum anderen fehlerträchtig.

Die US 5,848,609 zeigt ein digitales Stellglied, bei dem zum Zweck seiner Kalibrierung ein Eingabespannungsbereich und die für eine 90° Drehung benötigte Zeit erfasst und abgespeichert werden.

Die Aufgabe der vorliegenden Erfindung besteht darin, Möglichkeiten zu schaffen, mittels derer die Inbetriebnahme der Peripheriebaugruppe vereinfacht wird und insbesondere die erforderliche Zeitspanne automatisch und zuverlässig ermittelt und bestimmt werden kann.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 7.

Erfindungsgemäß wird ein Betriebsverfahren der eingangs genannten Art dadurch ausgestaltet, dass die Peripheriebaugruppe im Kalibrierbetrieb
- zunächst dem Anschluss über die Schalteinrichtung den Basisspannungswert zuführt,
- sodann zu einem Startzeitpunkt das Versorgungspotenzial auf den modifizierten Wert ändert und einen Reaktionszeitpunkt erfasst, zu dem die erwartete Änderung eintritt, und
- schließlich unter Verwendung des Startzeitpunkts und des Reaktionszeitpunkts die gültige Zeitspanne ermittelt.

Dadurch wird die Bedienperson von der oftmals mühevollen und zeitaufwändigen Aufgabe befreit, eine korrekte und insbesondere optimale Bestimmung der Zeitspanne vorzunehmen.

Die erwartete Änderung kann auf verschiedene Art und Weise bestimmt sein.

Beispielsweise ist es möglich, dass zumindest im Prüfbetrieb das Versorgungspotenzial und/oder der Versorgungsstrom erfasst werden. In diesem Fall kann die erwartete Änderung eine Änderung des Versorgungspotenzials und/oder des Versorgungsstroms sein.

Alternativ ist es möglich, dass die Peripheriebaugruppe über einen weiteren Anschluss zumindest im Prüfbetrieb einen Zustand der Feldeinheit entgegennimmt. In diesem Fall kann die erwartete Änderung eine Änderung des Zustands der Feldeinheit sein.

Diese beiden Ausgestaltungen sind sowohl dann realisierbar, wenn die Feldeinheit als Aktor ausgebildet ist, als auch dann realisierbar, wenn die Feldeinheit als Sensor ausgebildet ist.

In denjenigen Fällen, in denen die Feldeinheit als Aktor ausgebildet ist, ist es weiterhin möglich,
- dass die Peripheriebaugruppe über einen weiteren Anschluss der Peripheriebaugruppe ein weiteres Versorgungspotenzial an die Feldeinheit ausgibt, so dass der an die Feldeinheit ausgegebene Versorgungsstrom über den weiteren Anschluss von der Feldeinheit zur Peripheriebaugruppe zurückgeführt wird, und
- dass die erwartete Änderung eine Änderung des weiteren Versorgungspotenzials ist.

Vorzugsweise führt die Peripheriebaugruppe im Kalibrierbetrieb das Zuführen des Basisspannungswertes, das Modifizieren des Versorgungspotenzials und das Erfassen des Startzeitpunkts und des Reaktionszeitpunkts mehrmals durch und ermittelt hierfür jeweils eine vorläufige Zeitspanne. Dadurch ist es möglich, dass die Peripheriebaugruppe die gültige Zeitspanne durch statistische Auswertung der vorläufigen Zeitspannen ermittelt. Diese Vorgehensweise verbessert die Genauigkeit und die Zuverlässigkeit der von der Peripheriebaugruppe ermittelten gültigen Zeitspanne.

Im Falle einer mehrfachen Durchführung in Verbindung mit einer jeweiligen Ermittlung einer vorläufigen Zeitspanne ist es weiterhin möglich, dass die Peripheriebaugruppe die gültige Zeitspanne nur dann als gültig bestimmt, wenn eine Streuung der vorläufigen Zeitspannen eine vorbestimmte Bedingung erfüllt, und anderenfalls eine Meldung an eine übergeordnete Steuereinrichtung und/oder an eine Bedienperson ausgibt. Dadurch können insbesondere fehlerhafte Bestimmungen, die im späteren Betrieb der Peripheriebaugruppe entweder zu einem zu häufigen Auslösen von Fehlalarmen oder zu einem nicht tolerierbaren Nichterkennen von fehlerhaften Zuständen führen könnten, zuverlässig ausgeschlossen werden.

Die Aufgabe wird weiterhin durch eine Peripheriebaugruppe mit den Merkmalen des Anspruchs 8 gelöst. Vorteilhafte Ausgestaltungen der Peripheriebaugruppe sind Gegenstand der abhängigen Ansprüche 9 bis 14.

Erfindungsgemäß wird eine Peripheriebaugruppe der eingangs genannten Art dadurch ausgestaltet, dass der Controller im Kalibrierbetrieb
- zunächst dem Anschluss über die Schalteinrichtung den Basisspannungswert zuführt,
- sodann zu einem Startzeitpunkt durch Ansteuern der dem Anschluss vorgeordneten Schalteinrichtung das Versorgungspotenzial auf den modifizierten Wert ändert und einen Reaktionszeitpunkt erfasst, zu dem die erwartete Änderung eintritt, und
- schließlich unter Verwendung des Startzeitpunkts und des Reaktionszeitpunkts die gültige Zeitspanne ermittelt.

Die hierdurch erzielbaren Vorteile korrespondieren mit denen des Betriebsverfahrens.

Die vorteilhaften Ausgestaltungen der Peripheriebaugruppe korrespondieren mit den vorteilhaften Ausgestaltungen des Betriebsverfahrens. Gleiches gilt für die hierdurch jeweils erzielten Vorteile.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen industriellen technischen Prozess und eine speicherprogrammierbare Steuerung,
- FIG 2: eine Peripheriebaugruppe,
- FIG 3: ein Ablaufdiagramm,
- FIG 4: ein weiteres Ablaufdiagramm,
- FIG 5: ein weiteres Ablaufdiagramm und
- FIG 6: ein weiteres Ablaufdiagramm.

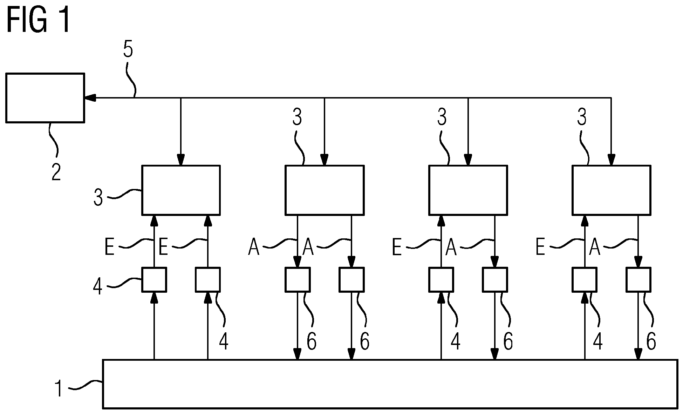

Gemäß FIG 1 wird mittels einer speicherprogrammierbaren Steuerung ein industrieller technischer Prozess 1 gesteuert bzw. zumindest teilweise gesteuert. Der industrielle technische Prozess 1 kann prinzipiell beliebiger Natur sein. Die speicherprogrammierbare Steuerung weist eine Zentraleinheit 2 und Peripheriebaugruppen 3 auf. Die Peripheriebaugruppen 3 nehmen über Sensoren 4 Eingangsgrößen E des Prozesses 1 entgegen und leiten sie - beispielsweise über ein Bussystem 5 - an die Zentraleinheit 2 weiter. Die Sensoren 4 können beispielsweise Notaus-Schalter sein. Es kann sich aber auch um andere Sensoren handeln. Die Zentraleinheit 2 ermittelt unter Berücksichtigung der an sie ermittelten Eingangsgrößen E Ausgangsgrößen A für den Prozess 1 und gibt sie - beispielsweise über das Bussystem 5 - an die Peripheriebaugruppen 3 aus. Die Peripheriebaugruppen 3 steuern daraufhin Aktoren 6, mittels derer der Prozess 1 beeinflusst wird, entsprechend an. Die Aktoren 6 können beispielsweise eine Energieversorgung des Prozesses 1 steuern. Es sind aber auch andere Aktionen möglich. Die Sensoren 4 und die Aktoren 6 sind Feldeinheiten im Sinne der vorliegenden Erfindung.

Nachfolgend wird der Betrieb einer einzelnen der Peripheriebaugruppen 3 näher erläutert. Hierbei wird angenommen, dass es sich bei der erläuterten Peripheriebaugruppe 3 um eine sogenannte gemischte Eingabe-/Ausgabe-Baugruppe handelt, d.h. eine Baugruppe, die sowohl von Sensoren 4 Eingangsgrößen E entgegennimmt und an die Zentraleinheit 2 übermittelt als auch von der Zentraleinheit 2 Ausgangsgrößen A entgegennimmt und Aktoren 6 entsprechend ansteuert. Prinzipiell wäre es jedoch ebenso möglich, dass die Peripheriebaugruppe 3 eine reine Eingabebaugruppe oder eine reine Ausgabebaugruppe ist, also eine Baugruppe, die entweder ausschließlich von Sensoren 4 Eingangsgrößen E entgegennimmt und an die Zentraleinheit 2 übermittelt oder ausschließlich von der Zentraleinheit 2 Ausgangsgrößen A entgegennimmt und Aktoren 6 entsprechend ansteuert. Weiterhin wird jeweils nur die Vorgehensweise bezüglich eines einzelnen Sensors 4 und eines einzelnen Aktors 6 erläutert. Selbstverständlich können die erläuterten Vorgehensweisen auch für mehrere Sensoren 4 und/oder mehrere Aktoren 6 ergriffen werden.

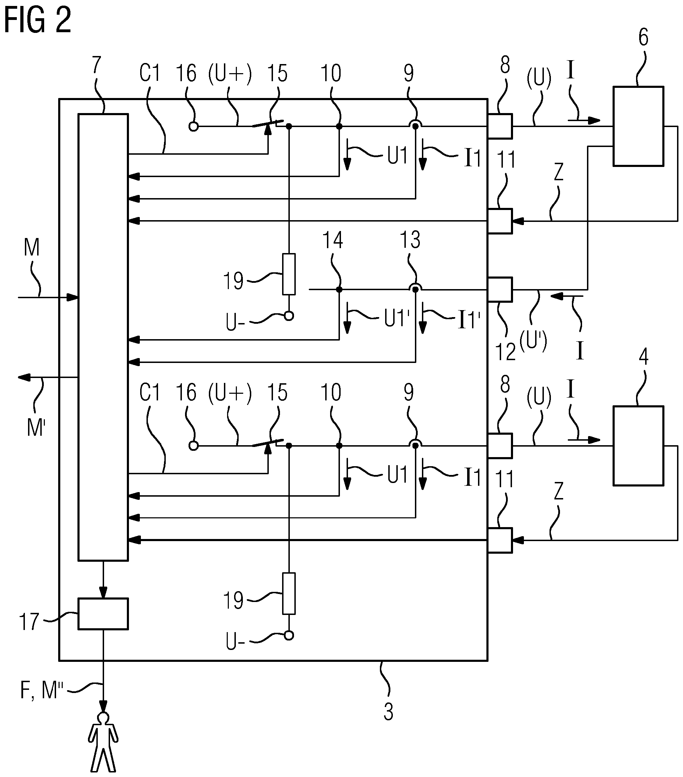

Gemäß FIG 2 weist die Peripheriebaugruppe 3 einen Controller 7 auf. Der Controller 7 ist zum einen diejenige Einrichtung, welche mit der Zentraleinheit 2 kommuniziert. Der Controller 7 ist zum anderen diejenige Einrichtung, welche die übrigen Elemente der Peripheriebaugruppe 3 steuert.

Die Peripheriebaugruppe 3 weist für jeden Aktor 6 und und für jeden Sensor 4, der an die Peripheriebaugruppe 3 angeschlossen ist, einen Anschluss 8 auf. Über den jeweiligen Anschluss 8 gibt die Peripheriebaugruppe 3 an einen der Aktoren 6 bzw. einen der Sensoren 4 ein Versorgungspotenzial U aus. Hiermit verbunden fließt ein zugehöriger jeweiliger Versorgungsstrom I, der dadurch ebenfalls an den jeweiligen Aktor 6 bzw. den jeweiligen Sensor 4 ausgegeben wird. Im Rahmen der Ausgestaltung von FIG 2 können das Versorgungspotenzial U und/oder der Versorgungsstrom I mittels entsprechender jeweiliger Erfassungseinrichtungen 9, 10 erfasst und entsprechende Messwerte U1, I1 dem Controller 7 zugeführt werden.

Bei Aktoren 6 ist es möglich, dass der jeweilige Aktor 6 ausschließlich über den genannten jeweiligen Anschluss 8 mit der Peripheriebaugruppe 3 verbunden ist. Dies stellt auch den Regelfall dar.

Bei Sensoren 4 nimmt die Peripheriebaugruppe 3 über einen jeweiligen weiteren Anschluss 11 einen Zustand Z des jeweiligen Sensors 4 entgegen. Bei Aktoren 6 ist dies ebenfalls möglich, aber nicht zwingend erforderlich. Im Falle der Rückführung des jeweiligen Zustands Z wird der jeweilige Zustand Z ebenfalls dem Controller 7 zugeführt.

Bei Aktoren 6 ist es weiterhin möglich, dass die Peripheriebaugruppe 3 über einen jeweiligen weiteren Anschluss 12 ein weiteres Versorgungspotenzial U' an den jeweiligen Aktor 6 ausgibt. In diesem Fall wird der (über den jeweiligen Anschluss 8) an den jeweiligen Aktor 6 ausgegebene jeweilige Versorgungsstrom I über den jeweiligen weiteren Anschluss 12 zur Peripheriebaugruppe 3 zurückgeführt. Es ist daher zum einen möglich, mittels einer jeweiligen weiteren Erfassungseinrichtung 13 ebenfalls den jeweiligen Versorgungsstrom I zu erfassen und als entsprechenden Messwert I1' dem Controller 7 zuzuführen. Diese Erfassung erfolgt in der Regel alternativ zur Erfassung des jeweiligen Versorgungsstroms I durch die Erfassungseinrichtung 9. Zum anderen ist es möglich, mittels einer jeweiligen Erfassungseinrichtung 14 das jeweilige weitere Versorgungspotenzial U' zu erfassen und als entsprechenden Messwert U1' dem Controller 7 zuzuführen. Diese Erfassung erfolgt in der Regel zusätzlich zur Erfassung des jeweiligen Versorgungspotenzials U durch die jeweilige Erfassungseinrichtung 10.

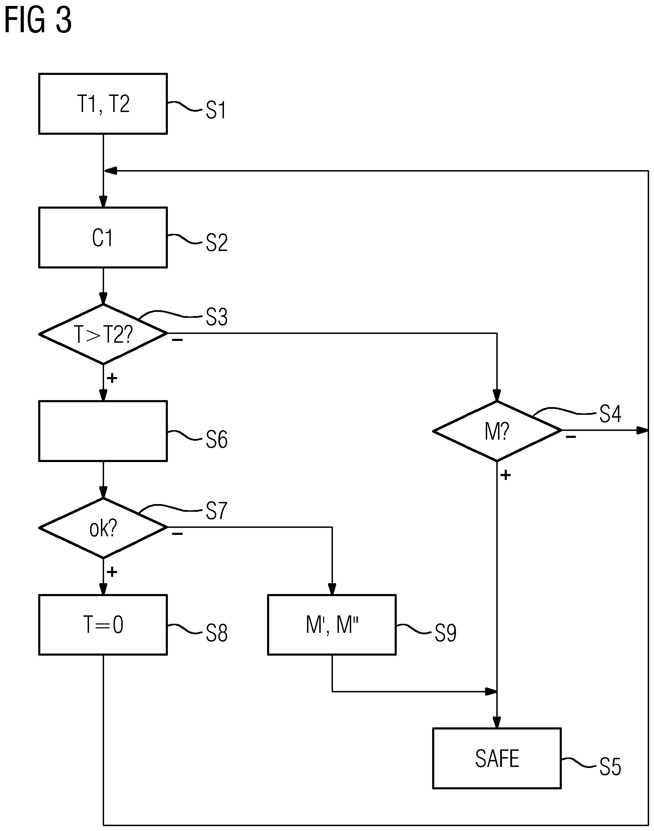

Nachfolgend wird in Verbindung mit FIG 3 erläutert, wie der Controller 7 die Peripheriebaugruppe 3 betreibt. Die entsprechenden Ausführungen gelten jeweils individuell für einen einzelnen Aktor 6 bzw. einen einzelnen Sensor 4.

Zunächst betreibt der Controller 7 die Peripheriebaugruppe 3 in einem Schritt S1 zunächst im Rahmen der Inbetriebnahme der Peripheriebaugruppe 3 in einem Kalibrierbetrieb. Im Kalibrierbetrieb wird insbesondere eine Zeitspanne T1 bestimmt. In der Regel wird weiterhin auch eine Zykluszeit T2 bestimmt. Der Kalibrierbetrieb und hierbei insbesondere die Bestimmung der Zeitspanne T1 werden später noch näher erläutert werden.

Sodann betreibt der Controller 7 die Peripheriebaugruppe 3 in einem Schritt S2 in einem Normalbetrieb. Im Normalbetrieb gibt der Controller 7 insbesondere ein jeweiliges Steuersignal C1 an eine jeweilige Schalteinrichtung 15 aus. Die Schalteinrichtung 15 ist dem jeweiligen Anschluss 8 innerhalb der Peripheriebaugruppe 3 vorgeordnet. Durch das entsprechende Ansteuern der jeweiligen Schalteinrichtung 15 wird bewirkt, dass das jeweilige Versorgungspotenzial U im Normalbetrieb einen Basisspannungswert aufweist, beispielsweise den Wert U+. Hiermit verbunden weist der jeweilige Versorgungsstrom I einen jeweiligen Basisstromwert 10 auf.

In einem Schritt S3 prüft der Controller 7, ob eine aufgelaufene Zeit T die Zykluszeit T2 erreicht (oder überschritten) hat. Die Zykluszeit T2 liegt oftmals im Bereich etlicher Sekunden, manchmal sogar im Bereich von Minuten oder Stunden. Wenn die Zykluszeit T2 noch nicht erreicht ist, geht der Controller 7 zu einem Schritt S4 über. Im Schritt S4 prüft der Controller 7, ob ihm von der Zentraleinheit 2 eine Alarmmeldung M übermittelt wurde. Wenn dies der Fall ist, geht der Controller 7 zu einem Schritt S5 über. Der Schritt S5 entspricht einem Alarmbetrieb der Peripheriebaugruppe 3. Im Schritt S5 überführt der Controller 7 die an die Peripheriebaugruppe 3 angeschlossenen Aktoren 6 in einen sicheren Zustand. Beispielsweise kann der Controller 7 Energieversorgungen 16, mittels derer die Aktoren 6 mit elektrischer Energie versorgt werden, abschalten und/oder von den Aktoren 6 trennen. Bezüglich des in FIG 2 dargestellten Aktors 6 kann der Controller 7 im Schritt S5 beispielsweise die Schalteinrichtung 15 öffnen und/oder die vorgeordnete Energieversorgung 16 abschalten. Falls der Controller 7 im Schritt S4 erkennt, dass ihm keine Alarmmeldung M übermittelt wurde, geht der Controller 7 zum Schritt S2 zurück.

Falls die aufgelaufene Zeit T die Zykluszeit T2 erreicht oder überschritten hat, geht der Controller 7 vom Schritt S3 zu einem Schritt S6 über. Der Schritt S6 entspricht einem Prüfbetrieb der Peripheriebaugruppe 3. Der Prüfbetrieb wird später näher erläutert werden. In einem Schritt S7 prüft der Controller 7, ob der Prüfbetrieb ordnungsgemäß abgeschlossen werden konnte. Wenn dies der Fall ist, beendet der Controller 7 den Prüfbetrieb und geht über einen Schritt S8 wieder zum Schritt S2 und damit zum Normalbetrieb über. Im Schritt S8 setzt der Controller 7 die aufgelaufene Zeit T zurück.

Anderenfalls geht der Controller 7 zu einem Schritt S9 über. Der Schritt S9 ist bereits Bestandteil des Alarmbetriebs. Im Schritt S9 kann der Controller 7 eine Alarmmeldung M' an die Zentraleinheit 2 ausgeben. Alternativ oder zusätzlich kann der Controller 7 im Schritt S9 über eine Mensch-Maschine-Schnittstelle 17 eine Alarmmeldung M" an eine Bedienperson 18 ausgeben. Die Alarmmeldung M" kann insbesondere ein optisches Signal und/oder ein akustisches Signal umfassen.

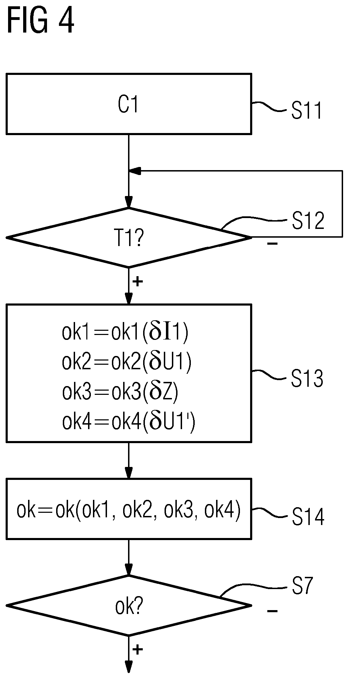

Nachfolgend in Verbindung mit FIG 4 der Prüfbetrieb näher erläutert. Gemäß FIG 4 steuert der Controller 7 im Prüfbetrieb in einem Schritt S11 die jeweilige Schalteinrichtung 15 an. Beispielsweise kann der Controller 7, wenn die jeweilige Schalteinrichtung 15 im Normalbetrieb geschlossen ist, die jeweilige Schalteinrichtung 15 im Schritt S11 derart ansteuern, dass sie geöffnet wird. Unabhängig von der konkreten Art der Ansteuerung der jeweiligen Schalteinrichtung 15 ändert sich jedoch durch das Ansteuern der jeweiligen Schalteinrichtung 15 das jeweilige Versorgungspotenzial U vom jeweiligen Basisspannungswert U+ auf einen jeweiligen modifizierten Spannungswert, nachfolgend mit dem Bezugszeichen U- versehen. Beispielsweise kann ein entsprechender Widerstand 19 vorhanden sein, über den der jeweilige Anschluss 8 bei geöffneter jeweiliger Schalteinrichtung 15 hochohmig mit dem modifizierten Spannungswert U- beaufschlagt wird. Es sind jedoch auch Ausgestaltungen möglich, bei denen der Widerstand 19 nicht erforderlich ist, beispielsweise im Falle einer Beaufschlagung eines jeweiligen Aktors 6 mit dem weiteren Versorgungspotenzial U' oder im Falle eines gezielten (beabsichtigten) Erd- oder Masseschlusses auf Seiten des jeweiligen Aktors 6 oder Sensors 4.

Sodann wartet der Controller 7 in einem Schritt S12 den Ablauf der Zeitspanne T1 ab. Das Abwarten der Zeitspanne T1 ist erforderlich, weil aufgrund von Kapazitäten und/oder Induktivitäten des angeschlossenen Aktors 6 bzw. Sensors 4 und/oder der Leitungen vom jeweiligen Anschluss 8 zum jeweiligen Aktor 6 oder Sensor 4 (und gegebenenfalls zurück zu einem oder beiden der Anschlüsse 11, 12) die Wirkung, die durch das Ansteuern der jeweiligen Schalteinrichtung 15 auftritt, sich erst mit einer gewissen Verzögerung bemerkbar macht.

Nach Ablauf der Zeitspanne T1 prüft der Controller 7 in einem Schritt S13, ob durch das Modifizieren des Versorgungspotenzials U eine erwartete Änderung eingetreten ist. Beispielsweise kann der Controller 7 entsprechend der Darstellung in FIG 4 im Schritt S13 prüfen, ob das Versorgungspotenzial U und/oder der Versorgungsstrom I sich in hinreichendem Umfang geändert haben. Dies ist im Schritt S13 dadurch angedeutet, dass der Controller 7 entsprechende logische Variablen ok1, ok2 in Abhängigkeit von der Änderung δU des jeweiligen Versorgungspotenzials U bzw. der Änderung δI des jeweiligen Versorgungsstroms I ermittelt. Die Ermittlung der logischen Variablen ok1, ok2 setzt - selbstverständlich - eine entsprechende Erfassung mittels der entsprechenden Erfassungseinrichtungen 9, 10 bzw. 10, 13 voraus. Alternativ oder zusätzlich ist es möglich, dass der Controller 7 im Schritt S13 prüft, ob der Zustand Z des jeweiligen Aktors 6 oder des jeweiligen Sensors 4 sich geändert hat. Dies ist im Schritt S13 dadurch angedeutet, dass der Controller 7 eine entsprechende logische Variable ok3 in Abhängigkeit von der Änderung δZ des Zustands Z ermittelt. Die Ermittlung der logischen Variablen ok3 setzt - selbstverständlich - eine entsprechende Rückführung des Zustands Z zur Peripherieeinheit 3 voraus. Im Falle eines Aktors 6 kann der Controller 7 weiterhin anhand einer Änderung δU' des jeweiligen weiteren Versorgungspotenzials U' eine logische Variable ok4 ermitteln.

In einem Schritt S14 kann der Controller 7 beispielsweise anhand der logischen Variablen ok1 und/oder der logischen Variablen ok2 und/oder der logischen Variablen ok3 und/oder der logischen Variablen ok4 eine resultierende logische Variable ok ermitteln. Die logische Variable ok nimmt den Wert WAHR dann an, wenn die erwartete Änderung eingetreten ist. Anderenfalls nimmt sie den Wert FALSCH an. Der Wert der logischen Variablen ok entscheidet somit, ob der Controller 7 vom nachfolgenden Schritt S7 zum Alarmbetrieb (Schritte S9 und S5, FIG 3) oder zum Normalbetrieb (Schritt S2, FIG 3) übergeht.

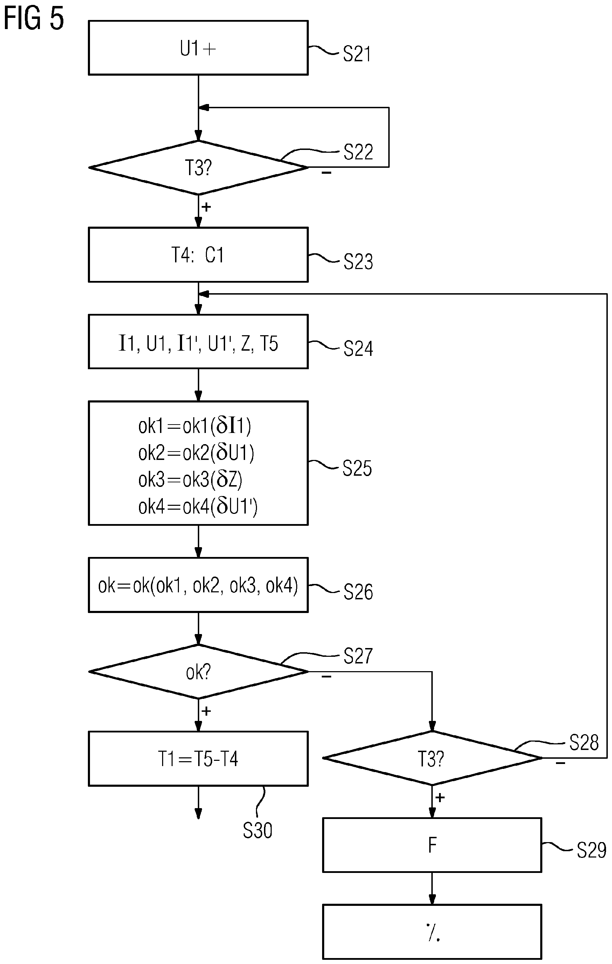

Nachfolgend in Verbindung mit FIG 5 der Kalibrierbetrieb näher erläutert. Gemäß FIG 5 führt der Controller 7 dem jeweiligen Anschluss 8 im Kalibrierbetrieb in einem Schritt S21 zunächst über die jeweilige Schalteinrichtung 15 den jeweiligen Basisspannungswert U+ zu. Diesen Zustand behält der Controller 7 für eine Maximalzeit T3 bei. Insbesondere prüft der Controller 7 kontinuierlich in einem Schritt S22, ob die Maximalzeit T3 abgelaufen ist. Die Maximalzeit T3 liegt meist im Bereich einiger weniger Sekunden, insbesondere in aller Regel unterhalb von drei Sekunden. Die Schritte S21 und S22 dienen dazu, für den entsprechenden Aktor 6 bzw. den entsprechenden Sensor 4 zunächst zuverlässig einen stabilen Zustand einzustellen, wie er auch im Normalbetrieb vorliegen sollte.

Sobald die Maximalzeit T3 abgelaufen ist, steuert der Controller 7 im Kalibrierbetrieb in einem Schritt S23 die jeweilige Schalteinrichtung 15 an. Beispielsweise kann der Controller 7, wenn die jeweilige Schalteinrichtung 15 im Normalbetrieb geschlossen ist, die jeweilige Schalteinrichtung 15 im Schritt S23 derart ansteuern, dass sie geöffnet wird. Der Schritt S23 korrespondiert inhaltlich mit dem Schritt S11 von FIG 4. Der Zeitpunkt, zu dem der Controller 7 zum Schritt S23 übergeht, entspricht einem Startzeitpunkt T4.

In einem Schritt S24 erfasst der Controller 7 mittels der Erfassungseinrichtungen 9, 10, 13 und/oder 14 die entsprechenden Messwerte I1, I1', U1 und/oder U1'. Gegebenenfalls erfasst er auch den jeweiligen Zustand Z. Hierauf aufbauend prüft der Controller 7 in Schritten S25 bis S27, ob durch das Modifizieren des jeweiligen Versorgungspotenzials U eine erwartete Änderung eingetreten ist. Die Schritte S25 und S26 entsprechen - mit den aktuellen Werten des Schrittes S24 und im Vergleich mit den vor der Ausführung des Schrittes S23 gültigen Werten - den Schritten S13 und S14 von FIG 4. Zusätzlich erfasst der Controller 7 im Schritt S24 auch den momentanen Zeitpunkt T5.

Sofern die erwartete Änderung (noch) nicht eingetreten ist, prüft der Controller 7 in einem Schritt S28, ob - gerechnet ab der Ausführung des Schrittes S23 - die Maximalzeit T3 abgelaufen ist. Wenn dies nicht der Fall ist, geht der Controller 7 zum Schritt S24 zurück. Anderenfalls geht der Controller 7 zu einem Schritt S29 über. Im Schritt S29 gibt der Controller 7 eine Fehlermeldung F aus, vorzugsweise über die Mensch-Maschine-Schnittstelle 17. Wenn der Controller 7 im Schritt S27 hingegen feststellt, dass die erwartete Änderung eingetreten ist, geht der Controller 7 zu einem Schritt S30 über. Der bei der unmittelbar vorhergehenden Ausführung des Schrittes S24 erfasste momentane Zeitpunkt T5 entspricht in diesem Fall zugleich auch einem Reaktionszeitpunkt T5. Der Controller 7 kann daher im Schritt S30 die gültige Zeitspanne T1 unter Verwendung des Startzeitpunkts T4 und des Reaktionszeitpunkts T5 ermitteln, beispielsweise durch Bilden der Differenz.

Die obenstehend erläuterte Vorgehensweise ist - mit Ausnahme der Erfassung des Messwerts U1' für das weitere Potenzial U', diese Ausgestaltung ist nur bei einem Aktor 6 realisierbar - gleichermaßen bei einem Aktor 6 und einem Sensor 4 realisierbar.

Die Festlegung der Zykluszeit T2 wurde obenstehend nicht näher erläutert. Die Zykluszeit T2 kann beispielsweise fest vorgegeben sein. Alternativ kann sie dem Controller 7 beispielsweise über die Mensch-Maschine-Schnittstelle 17 von der Bedienperson 18 vorgegeben werden. In diesem Fall ist dem Schritt S21 ein weiterer Schritt vorgelagert, in dem die Vorgabe der Zykluszeit T2 erfolgt. Die Zykluszeit T2 kann in diesem Fall nach Bedarf einzeln für jeden Sensor 4 und jeden Aktor 6 oder gruppenweise für mehrere Sensoren 4 und/oder mehrere Aktoren 6 oder einheitlich für alle Sensoren 4 und/oder Aktoren 6 erfolgen.

Ebenso wurde obenstehend die Festlegung des Basisspannungswerts U+ und des modifizierten Spannungswerts U- nicht näher erläutert. Es ist möglich, dass der Basisspannungswert U+ und der modifizierte Spannungswert U- dem Controller 7 fest vorgegeben sind. In der Regel werden sie jedoch - und zwar einzeln für den jeweiligen Aktor 6 bzw. Sensor 4 - von der Bedienperson 18 festgelegt. Die Festlegung kann insbesondere dadurch erfolgen, dass für den Basisspannungswert U+ die Auswahl eines Wertes von zwei möglichen Werten erfolgt und der modifizierte Spannungswert U- der jeweils andere Wert ist. Es sind aber auch andere Vorgaben möglich.

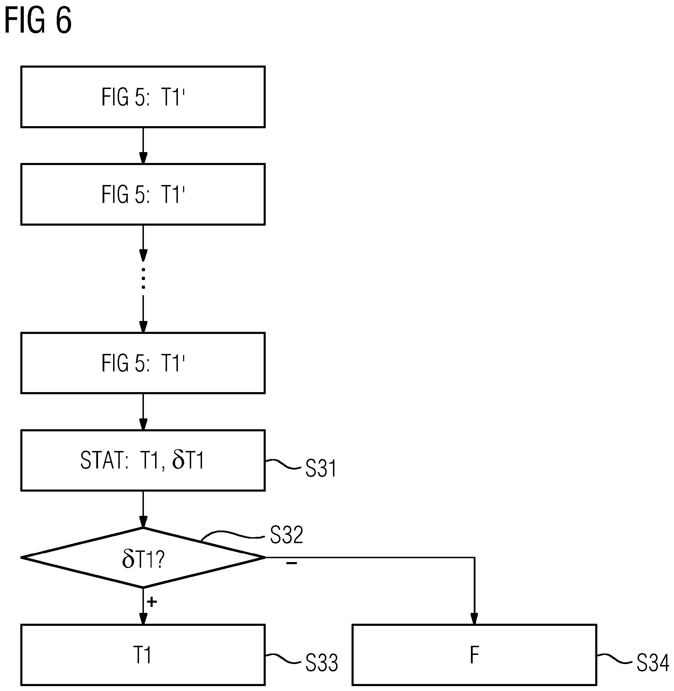

Die obenstehend in Verbindung mit FIG 5 erläuterte Vorgehensweise kann entsprechend der Darstellung in FIG 6 dadurch noch weiter verbessert werden, dass der Controller 7 die Vorgehensweise von FIG 5 mehrmals durchführt. Insbesondere führt der Controller 7 somit - bezogen auf den jeweiligen Aktor 6 oder den jeweiligen Sensor 4 - das Zuführen des Basisspannungswertes U+, das Modifizieren des Versorgungspotenzials U und das Erfassen des Startzeitpunkts T4 und des Reaktionszeitpunkts T5 mehrmals durch. Für jede Durchführung ermittelt der Controller 7 jeweils die zugehörige Zeitspanne. Die jeweilige ermittelte Zeitspanne ist jedoch im Rahmen der Ausgestaltung von FIG 6 nur vorläufig. Sie ist daher in FIG 6 nicht mit dem Bezugszeichen T1, sondern mit dem Bezugszeichen Tl' versehen.

Aufgrund der mehrmaligen Ermittlung der vorläufigen Zeitspannen Tl' kann der Controller 7 in einem Schritt S31 eine statistische Auswertung der vorläufigen Zeitspannen Tl' vornehmen. Insbesondere kann der Controller 7 durch die statistische Auswertung des Schrittes S31 die Zeitspanne T1 als Minimum, als Maximum, als Mittelwert oder als Medianwert der vorläufigen Zeitspannen Tl' ermitteln. Weiterhin kann der Controller 7 in einem Schritt S32 prüfen, ob eine Streuung δT1 der vorläufigen Zeitspannen Tl' eine vorbestimmte Bedingung erfüllt. Beispielsweise kann der Controller 7 prüfen, ob die absolute Streuung oder die auf den Mittelwert der vorläufigen Zeitspannen Tl' bezogene relative Streuung unterhalb eines vorbestimmten Grenzwerts bleibt. Nur wenn die vorbestimmte Bedingung erfüllt ist, wird die im Schritt S31 ermittelte Zeitspanne T1 in einem Schritt S33 als gültige Zeitspanne T1 bestimmt. Anderenfalls kann der Controller 7 in einem Schritt S34 eine Meldung an eine übergeordnete Steuereinrichtung - beispielsweise die Zentraleinheit 2 - und/oder über die Mensch-Maschine-Schnittstelle 17 an die Bedienperson 18 ausgeben. Die Meldung kann mit der Fehlermeldung F identisch sein.

Zusammengefasst betrifft die vorliegende Erfindung somit folgenden Sachverhalt:
Eine Peripheriebaugruppe 3 einer speicherprogrammierbaren Steuerung gibt über einen Anschluss 8 ein Versorgungspotenzial U und hiermit verbunden einen Versorgungsstrom I an eine Feldeinheit 4, 6 aus. Das Versorgungspotenzial U weist in einem Normalbetrieb einen Basisspannungswert U+ auf, der Versorgungsstrom I einen Basisstromwert I0. Die Peripheriebaugruppe 3 geht von Zeit zu Zeit vom Normalbetrieb in einen Prüfbetrieb über, in dem sie durch Ansteuern einer dem Anschluss 8 vorgeordneten Schalteinrichtung 15 für eine definierte Zeitspanne T1 das Versorgungspotenzial U vom Basisspannungswert U+ auf einen modifizierten Spannungswert U- ändert, prüft, ob danach eine erwartete Änderung eingetreten ist, und je nach Ergebnis wieder in den Normalbetrieb oder in einen Alarmbetrieb übergeht. Im Alarmbetrieb gibt die Peripheriebaugruppe 3 Alarmmeldung M' an eine Zentraleinheit 2 der speicherprogrammierbaren Steuerung aus und überführt an die Peripheriebaugruppe 3 angeschlossene Aktoren 6 in einen sicheren Zustand. Im Rahmen der Inbetriebnahme geht die Peripheriebaugruppe 3 vor dem Normalbetrieb zunächst in einen Kalibrierbetrieb über, in dem sie zunächst dem Anschluss 8 über die Schalteinrichtung 15 den Basisspannungswert U+ zuführt und sodann zu einem Startzeitpunkt T4 das Versorgungspotenzial U auf den modifizierten Wert U- ändert. Sie erfasst einen Reaktionszeitpunkt T5, zu dem die erwartete Änderung eintritt, und ermittelt unter Verwendung des Startzeitpunkts T4 und des Reaktionszeitpunkts T5 die gültige Zeitspanne T1.

Die vorliegende Erfindung weist viele Vorteile auf. Insbesondere ist es bei fehlersicheren Peripheriebaugruppen 3, bei denen immer wieder eine Überprüfung der Schalteinrichtungen 15, der Energieversorgungen 16 und der angeschlossenen Aktoren 6 und Sensoren 4 erfolgen muss, auf einfache Weise möglich, optimierte Zeitspannen T1 zu ermitteln.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Peripheriebaugruppe (3) einer speicherprogrammierbaren Steuerung,
- wobei die Peripheriebaugruppe (3) über einen Anschluss (8) der Peripheriebaugruppe (3) ein Versorgungspotenzial (U) und hiermit verbunden einen zugehörigen Versorgungsstrom (I) an eine an die Peripheriebaugruppe (3) angeschlossene Feldeinheit (4, 6) ausgibt,
- wobei das Versorgungspotenzial (U) in einem Normalbetrieb einen Basisspannungswert (U+) aufweist und hiermit verbunden der Versorgungsstrom (I) einen Basisstromwert (I0) aufweist,
- wobei die Peripheriebaugruppe (3) von Zeit zu Zeit vom Normalbetrieb in einen Prüfbetrieb übergeht, in dem die Peripheriebaugruppe (3)
-- durch Ansteuern einer dem Anschluss (8) innerhalb der Peripheriebaugruppe (3) vorgeordneten Schalteinrichtung (15) für eine definierte gültige Zeitspanne (T1) das Versorgungspotenzial (U) vom Basisspannungswert (U+) auf einen modifizierten Spannungswert (U-) ändert,
-- prüft, ob nach Ablauf der definierten Zeitspanne (T1) eine durch das Modifizieren des Versorgungspotenzials (U) erwartete Änderung eingetreten ist,
-- bei Eintreten der erwarteten Änderung wieder in den Normalbetrieb übergeht und
-- bei Nichteintreten der erwarteten Änderung in einen Alarmbetrieb übergeht,
- wobei die Peripheriebaugruppe (3) im Alarmbetrieb eine Alarmmeldung (M') an eine Zentraleinheit (2) der speicherprogrammierbaren Steuerung ausgibt und/oder über Ausgänge (8) der Peripheriebaugruppe (3) an die Peripheriebaugruppe (3) angeschlossene Aktoren (6) in einen sicheren Zustand überführt,
- wobei die Peripheriebaugruppe (3) im Rahmen der Inbetriebnahme der Peripheriebaugruppe (3) vor dem Normalbetrieb zunächst in einen Kalibrierbetrieb übergeht,
**dadurch gekennzeichnet, dass** die Peripheriebaugruppe (3) im Kalibrierbetrieb
- zunächst dem Anschluss (8) über die Schalteinrichtung (15) den Basisspannungswert (U+) zuführt,
- sodann zu einem Startzeitpunkt (T4) das Versorgungspotenzial (U) auf den modifizierten Wert (U-) ändert und einen Reaktionszeitpunkt (T5) erfasst, zu dem die erwartete Änderung eintritt, und
- schließlich unter Verwendung des Startzeitpunkts (T4) und des Reaktionszeitpunkts (T5) die gültige Zeitspanne (T1) ermittelt.

2. Betriebsverfahren nach Anspruch 1,
**dadurch gekennzeichnet,**
- **dass** zumindest im Prüfbetrieb das Versorgungspotenzial (U) und/oder der Versorgungsstrom (I) erfasst werden und
- **dass** die erwartete Änderung eine Änderung des Versorgungspotenzials (U) und/oder des Versorgungsstroms (I) ist.

3. Betriebsverfahren nach Anspruch 1,
**dadurch gekennzeichnet,**
- **dass** die Peripheriebaugruppe (3) über einen weiteren Anschluss (11) zumindest im Prüfbetrieb einen Zustand (Z) der Feldeinheit (4, 6) entgegennimmt und
- **dass** die erwartete Änderung eine Änderung des Zustands (Z) der Feldeinheit (4, 6) ist.

4. Betriebsverfahren nach Anspruch 2 oder 3,
**dadurch gekennzeichnet,**
**dass** die Feldeinheit (4, 6) als Aktor (6) oder als Sensor (4) ausgebildet ist.

5. Betriebsverfahren nach Anspruch 1,
**dadurch gekennzeichnet,**
- **dass** die Feldeinheit (4, 6) als Aktor (6) ausgebildet ist,
- **dass** die Peripheriebaugruppe (3) über einen weiteren Anschluss (12) der Peripheriebaugruppe (3) ein weiteres Versorgungspotenzial (U') an die Feldeinheit (6) ausgibt, so dass der an die Feldeinheit (6) ausgegebene Versorgungsstrom (I) über den weiteren Anschluss (12) von der Feldeinheit (6) zur Peripheriebaugruppe (3) zurückgeführt wird, und
- **dass** die erwartete Änderung eine Änderung des weiteren Versorgungspotenzials (U') ist.

6. Betriebsverfahren nach einem der obigen Ansprüche,
**dadurch gekennzeichne**t,
dass die Peripheriebaugruppe (3) im Kalibrierbetrieb
- das Zuführen des Basisspannungswertes (U+), das Modifizieren des Versorgungspotenzials (U) und das Erfassen des Startzeitpunkts (T4) und des Reaktionszeitpunkts (T5) mehrmals durchführt,
- hierfür jeweils eine vorläufige Zeitspanne (T1') ermittelt und
- die gültige Zeitspanne (T1) durch statistische Auswertung der vorläufigen Zeitspannen (T1') ermittelt.

7. Betriebsverfahren nach Anspruch 6,
**dadurch gekennzeichnet,**
**dass** die Peripheriebaugruppe (3) die gültige Zeitspanne (T1) nur dann als gültig bestimmt, wenn eine Streuung der vorläufigen Zeitspannen (T1') eine vorbestimmte Bedingung erfüllt, und anderenfalls eine Meldung (F) an eine übergeordnete Steuereinrichtung (2) und/oder an eine Bedienperson (18) ausgibt.

8. Peripheriebaugruppe einer speicherprogrammierbaren Steuerung,
- wobei die Peripheriebaugruppe einen Anschluss (8) aufweist, über den die Peripheriebaugruppe ein Versorgungspotenzial (U) und hiermit verbunden einen zugehörigen Versorgungsstrom (I) an eine an die Peripheriebaugruppe angeschlossene Feldeinheit (4, 6) ausgibt,
- wobei die Peripheriebaugruppe einen Controller (7) aufweist, der die Peripheriebaugruppe zumindest in einem Normalbetrieb, einem Prüfbetrieb, einem Alarmbetrieb und einem Kalibrierbetrieb betreiben kann,
- wobei der Controller (7) die Peripheriebaugruppe derart betreibt, dass das Versorgungspotenzial (U) im Normalbetrieb einen Basisspannungswert (U+) aufweist und hiermit verbunden der Versorgungsstrom (I) einen Basisstromwert (I0) aufweist,
- wobei der Controller (7) die Peripheriebaugruppe von Zeit zu Zeit vom Normalbetrieb in den Prüfbetrieb überführt,
- wobei der Controller (7) im Prüfbetrieb
-- durch Ansteuern einer dem Anschluss (8) innerhalb der Peripheriebaugruppe (3) vorgeordneten Schalteinrichtung (15) für eine definierte gültige Zeitspanne (T1) das Versorgungspotenzial (U) vom Basisspannungswert (U+) auf einen modifizierten Spannungswert (U-) ändert,
-- prüft, ob nach Ablauf der definierten Zeitspanne (T1) eine durch das Modifizieren des Versorgungspotenzials (U) erwartete Änderung eingetreten ist,
-- bei Eintreten der erwarteten Änderung wieder in den Normalbetrieb übergeht und
-- bei Nichteintreten der erwarteten Änderung die Peripheriebaugruppe in den Alarmbetrieb überführt,
- wobei der Controller (7) im Alarmbetrieb eine Alarmmeldung (M') an eine Zentraleinheit (2) der speicherprogrammierbaren Steuerung ausgibt und/oder über Ausgänge (8) der Peripheriebaugruppe (3) an die Peripheriebaugruppe (3) angeschlossene Aktoren (6) in einen sicheren Zustand überführt,
- wobei der Controller (7) die Peripheriebaugruppe im Rahmen der Inbetriebnahme der Peripheriebaugruppe vor dem Normalbetrieb zunächst im Kalibrierbetrieb betreibt,
**dadurch gekennzeichnet,**
**dass** der Controller (7) im Kalibrierbetrieb
- zunächst dem Anschluss (8) über die Schalteinrichtung (15) den Basisspannungswert (U+) zuführt,
- sodann zu einem Startzeitpunkt (T4) das Versorgungspotenzial (U) auf den modifizierten Wert (U-) ändert und einen Reaktionszeitpunkt (T5) erfasst, zu dem die erwartete Änderung eintritt, und
- schließlich unter Verwendung des Startzeitpunkts (T4) und des Reaktionszeitpunkts (T5) die gültige Zeitspanne (T1) ermittelt.

9. Peripheriebaugruppe nach Anspruch 8,
**dadurch gekennzeichnet,**
- **dass** der Controller (7) zumindest im Prüfbetrieb das Versorgungspotenzial (U) und/oder der Versorgungsstrom (I) erfasst und
- **dass** die erwartete Änderung eine Änderung des Versorgungspotenzials (U) und/oder des Versorgungsstroms (I) ist.

10. Peripheriebaugruppe nach Anspruch 8,
**dadurch gekennzeichnet,**
- **dass** die Peripheriebaugruppe mindestens einen weiteren Anschluss (11) aufweist, über den die Peripheriebaugruppe zumindest im Prüfbetrieb einen Zustand (Z) der Feldeinheit (4, 6) entgegennimmt und
- **dass** die erwartete Änderung eine Änderung des Zustands (Z) der Feldeinheit (4, 6) ist.

11. Peripheriebaugruppe nach Anspruch 9 oder 10,
**dadurch gekennzeichnet,**
**dass** die Feldeinheit (4, 6) als Aktor (6) oder als Sensor (4) ausgebildet ist.

12. Peripheriebaugruppe nach Anspruch 8,
**dadurch gekennzeichnet,**
- **dass** die Feldeinheit (4, 6) als Aktor (6) ausgebildet ist,
- **dass** die Peripheriebaugruppe einen weiteren Anschluss (12) aufweist, über den die Peripheriebaugruppe ein weiteres Versorgungspotenzial (U') an die Feldeinheit (6) ausgibt, so dass der an die Feldeinheit (6) ausgegebene Versorgungsstrom (I) über den weiteren Anschluss (12) von der Feldeinheit (6) zur Peripheriebaugruppe zurückgeführt wird, und
- **dass** die erwartete Änderung eine Änderung des weiteren Versorgungspotenzials (U') ist.

13. Peripheriebaugruppe nach einem der Ansprüche 8 bis 12,
**dadurch gekennzeichnet,**
**dass** der Controller (7) im Kalibrierbetrieb
- das Zuführen des Basisspannungswertes (U+), das Modifizieren des Versorgungspotenzials (U) und das Erfassen des Startzeitpunkts (T4) und des Reaktionszeitpunkts (T5) mehrmals durchführt,
- hierfür jeweils eine vorläufige Zeitspanne (T1') ermittelt und
- die gültige Zeitspanne (T1) durch statistische Auswertung der vorläufigen Zeitspannen (T1') ermittelt.

14. Peripheriebaugruppe nach einem der Ansprüche 8 bis 13,
**dadurch gekennzeichnet,**
**dass** der Controller (7) die gültige Zeitspanne (T1) nur dann als gültig bestimmt, wenn eine Streuung der vorläufigen Zeitspannen (T1') eine vorbestimmte Bedingung erfüllt, und anderenfalls eine Meldung (F) an eine übergeordnete Steuereinrichtung (2) und/oder an eine Bedienperson (18) ausgibt.

## Claims

1. Operating method for a peripheral module (3) of a programmable logic controller,
- wherein the peripheral module (3) outputs, via a terminal (8) of the peripheral module (3), a supply potential (U) and, in this respect, an associated supply current (I) to a field unit (4, 6) connected to the peripheral module (3),
- wherein, in a normal mode, the supply potential (U) has a base voltage value (U+) and, in this respect, the supply current (I) has a base current value (I0),
- wherein the peripheral module (3) changes over from time to time from normal mode into a test mode, in which the peripheral module (3)
-- changes the supply potential (U) from the base voltage value (U+) to a modified voltage value (U-) by driving a switching device (15) which is upstream of the terminal (8) within the peripheral module (3) for a defined valid time interval (T1),
-- checks whether, once the defined time interval (T1) has elapsed, an expected change has occurred due to the modification of the supply potential (U),
-- changes back over into normal mode if the expected change occurs and
-- changes over to alarm mode if the expected change does not occur,
- wherein, in alarm mode, the peripheral module (3) outputs an alarm message (M') to a central unit (2) of the programmable logic controller and/or, via outputs (8) of the peripheral module (3), transfers actuators (6) connected to the peripheral module (3) into a safe state,
- wherein, in the course of commissioning of the peripheral module (3), the peripheral module (3) initially changes over prior to normal mode into a calibration mode,
**characterised in that**, in calibration mode, the peripheral module (3)
- initially supplies the base voltage value (U+) to the terminal (8) via the switching device (15),
- then, at a start time (T4), changes the supply potential (U) to the modified value (U-) and acquires a response time (T5) at which the expected change occurs, and
- finally, using the start time (T4) and the response time (T5), ascertains the valid time interval (T1).

2. Operating method according to claim 1,
**characterised**
- **in that**, at least in test mode, the supply potential (U) and/or the supply current (I) are acquired and
- **in that** the expected change is a change in the supply potential (U) and/or in the supply current (I).

3. Operating method according to claim 1,
**characterised**
- **in that**, at least in test mode, the peripheral module (3) receives a state (Z) of the field unit (4, 6) via a further terminal (11) and
- **in that** the expected change is a change in the state (Z) of the field unit (4, 6).

4. Operating method according to claim 2 or 3,
**characterised**
**in that** the field unit (4, 6) takes the form of an actuator (6) or a sensor (4).

5. Operating method according to claim 1,
**characterised**
- **in that** the field unit (4, 6) takes the form of an actuator (6),
- **in that** the peripheral module (3) outputs a further supply potential (U') to the field unit (6) via a further terminal (12) of the peripheral module (3), such that the supply current (I) output to the field unit (6) is returned to the peripheral module (3) from the field unit (6) via the further terminal (12), and
- **in that** the expected change is a change in the further supply potential (U').

6. Operating method according to one of the preceding claims,
**characterised**
**in that**, in calibration mode, the peripheral module (3)
- in each case repeatedly supplies the base voltage value (U+), modifies the supply potential (U) and acquires the start time (T4) and response time (T5),
- to this end in each case ascertains a provisional time interval (T1') and
- ascertains the valid time interval (T1) by statistical evaluation of the provisional time intervals (T1').

7. Operating method according to claim 6,
**characterised**
**in that** the peripheral module (3) only determines the valid time interval (T1) to be valid if a scatter of the provisional time intervals (T1') meets a predetermined condition and otherwise outputs a message (F) to a higher-level control device (2) and/or to an operator (18).

8. Peripheral module of a programmable logic controller,
- wherein the peripheral module has a terminal (8), via which the peripheral module outputs a supply potential (U) and, in this respect, an associated supply current (I) to a field unit (4, 6) connected to the peripheral module,
- wherein the peripheral module has a controller (7) which is capable of operating the peripheral module at least in a normal mode, a test mode, an alarm mode and a calibration mode,
- wherein the controller (7) operates the peripheral module in such a manner that, in normal mode, the supply potential (U) has a base voltage value (U+) and, in this respect, the supply current (I) has a base current value (I0),
- wherein the controller (7) transfers the peripheral module from time to time from normal mode into test mode,
- wherein, in test mode, the controller (7)
-- changes the supply potential (U) from the base voltage value (U+) to a modified voltage value (U-) by driving a switching device (15) which is upstream of the terminal (8) within the peripheral module (3) for a defined valid time interval (T1),
-- checks whether, once the defined time interval (T1) has elapsed, an expected change has occurred due to the modification of the supply potential (U),
-- changes back over into normal mode if the expected change occurs and
-- transfers the peripheral module into alarm mode if the expected change does not occur,
- wherein, in alarm mode, the controller (7) outputs an alarm message (M') to a central unit (2) of the programmable logic controller and/or, via outputs (8) of the peripheral module (3), transfers actuators (6) connected to the peripheral module (3) into a safe state,
- wherein, in the course of commissioning of the peripheral module, the controller (7) initially operates the peripheral module in calibration mode prior to normal mode,
**characterised**
**in that**, in calibration mode, the controller (7)
- initially supplies the base voltage value (U+) to the terminal (8) via the switching device (15),
- then, at a start time (T4), changes the supply potential (U) to the modified value (U-) and acquires a response time (T5) at which the expected change occurs, and
- finally, using the start time (T4) and the response time (T5), ascertains the valid time interval (T1).

9. Peripheral module according to claim 8,
**characterised**
- **in that**, at least in test mode, the controller (7) acquires the supply potential (U) and/or the supply current (I) and
- **in that** the expected change is a change in the supply potential (U) and/or in the supply current (I).

10. Peripheral module according to claim 8,
**characterised**
- **in that** the peripheral module has at least one further terminal (11), via which the peripheral module receives a state (Z) of the field unit (4, 6), at least in test mode, and
- **in that** the expected change is a change in the state (Z) of the field unit (4, 6).

11. Peripheral module according to claim 9 or 10,
**characterised**
**in that** the field unit (4, 6) takes the form of an actuator (6) or a sensor (4).

12. Peripheral module according to claim 8,
**characterised**
- **in that** the field unit (4, 6) takes the form of an actuator (6),
- **in that** the peripheral module has a further terminal (12), via which the peripheral module outputs a further supply potential (U') to the field unit (6), such that the supply current (I) output to the field unit (6) is returned to the peripheral module from the field unit (6) via the further terminal (12), and
- **in that** the expected change is a change in the further supply potential (U').

13. Peripheral module according to one of claims 8 to 12,
**characterised**
**in that**, in calibration mode, the controller (7)
- in each case repeatedly supplies the base voltage value (U+), modifies the supply potential (U) and acquires the start time (T4) and response time (T5),
- to this end in each case ascertains a provisional time interval (T1') and
- ascertains the valid time interval (T1) by statistical evaluation of the provisional time intervals (T1').

14. Peripheral module according to one of claims 8 to 13,
**characterised**
**in that** the controller (7) only determines the valid time interval (T1) to be valid if a scatter of the provisional time intervals (T1') meets a predetermined condition and otherwise outputs a message (F) to a higher-level control device (2) and/or to an operator (18).

## Revendications

1. Procédé pour faire fonctionner un module (3) périphérique d'un automate programmable,
- dans lequel le module (3) périphérique émet un potentiel (U) d'alimentation et, lié à cela, un courant (I) d'alimentation lui appartenant vers une unité (4) sur site raccordée au module (3) périphérique,
- dans lequel le potentiel (U) d'alimentation a, dans un fonctionnement normal, une valeur (U+) de tension de base et, lié à cela, le courant (I) d'alimentation a une valeur (I0) de courant de base,
- dans lequel le module (3) périphérique passe, de temps à autre, du fonctionnement normal à un fonctionnement de contrôle, dans lequel le module (3) périphérique
-- par commande d'un dispositif (15) de coupure, monté en amont de la borne (8) au sein du module (3) périphérique, modifie, pendant un laps de temps (T1) valable d'une manière définie, le potentiel (U) d'alimentation, en le faisant passer de la valeur (U+) de tension de base à une valeur (U-) de tension modifiée,
-- contrôle si, après l'expiration du laps de temps (T1) défini, une variation escomptée par la modification du potentiel (U) d'alimentation s'est produite,
-- si la variation escomptée s'est produite, repasse en fonctionnement normal et
-- si la variation escomptée ne s'est pas produite, passe dans un fonctionnement d'alerte,
- dans lequel le module (3) périphérique envoie un message (M') d'alerte à une unité (2) centrale de l'automate programmable et/ou, par des sorties (8) du module (3) périphérique, fait passer dans un état sécurisé des actionneurs (6) connectés au module (3) périphérique,
- dans lequel le module (3) périphérique passe, dans le cadre de la mise en service du module (3) périphérique, avant le fonctionnement normal, d'abord dans un fonctionnement d'étalonnage,
**caractérisé en ce que**
le module (3) périphérique, dans le fonctionnement d'étalonnage
- envoie d'abord la valeur (U+) de tension de base à la borne (8) par l'intermédiaire du dispositif (15) de coupure,
- immédiatement, à un instant (T4) de début, fait passer le potentiel (U) d'alimentation à la valeur (U-) modifiée et détecte un instant (T5) de réaction, où la variation escomptée se produit, et
- finalement, en utilisant l'instant (T4) de début et l'instant (T5) de réaction, détermine le laps de temps (T1) valable.

2. Procédé suivant la revendication 1,
**caractérisé**
- **en ce que** l'on détecte au moins, dans le fonctionnement de contrôle, le potentiel (U) d'alimentation et/ou le courant (I) d'alimentation et
- **en ce que** la variation escomptée est une variation du potentiel (U) d'alimentation et/ou du courant (I) d'alimentation.

3. Procédé suivant la revendication 1,
**caractérisé**
- **en ce que** le module (3) périphérique reçoit, par l'intermédiaire d'au moins une autre borne (11), au moins dans le fonctionnement de contrôle, un état (Z) de l'unité (4, 6) sur site et
- **en ce que** la variation escomptée est une variation de l'état (Z) de l'unité (4, 6) sur site.

4. Procédé suivant la revendication 2 ou 3,
**caractérisé**
**en ce que** l'unité (4, 6) sur site est constituée sous la forme d'un actionneur (6) ou sous la forme d'un capteur (4).

5. Procédé suivant la revendication 1,
**caractérisé**
- **en ce que** l'unité (4, 6) sur site est constituée sous la forme d'un actionneur (6),
- **en ce que** le module (3) périphérique envoie à l'unité (6) sur site un autre potentiel (U') d'alimentation par l'intermédiaire d'une autre borne (12) du module (3) périphérique, de manière à ce que le courant (I) d'alimentation, envoyé à l'unité (6) sur site, soit, par l'intermédiaire de l'autre borne (12), retourné de l'unité (6) sur site au module (3) périphérique et
- **en ce que** la variation escomptée est une variation de l'autre potentiel (U') d'alimentation.

6. Procédé suivant l'une des revendications précédentes,
**caractérisé**
**en ce que** le module (3) périphérique, dans le fonctionnement d'étalonnage
- effectue plusieurs fois l'envoi de la valeur (U+) de tension de base, la modification du potentiel (U) d'alimentation et la détection de l'instant (T4) de début et de l'instant (T5) de réaction,
- détermine à cet effet, respectivement, un laps de temps (T1') provisoire et
- détermine le laps de temps (T1) valable par exploitation statistique des laps de temps (T1') provisoires.

7. Procédé suivant la revendication 6,
**caractérisé**
**en ce que** le module (3) périphérique détermine, comme valable, le laps de temps (T1) valable seulement si une dispersion des laps de temps (T1') provisoires satisfait une condition déterminée à l'avance, et sinon envoie un message (F) à un dispositif (2) de commande supérieur hiérarchiquement et/ou à un opérateur (18).

8. Module périphérique d'un automate programmable,
- dans lequel le module périphérique a une borne (8), par l'intermédiaire de laquelle le module périphérique envoie, à l'unité (4, 6) sur site connectée au module périphérique, un potentiel (U) d'alimentation et, lié à cela, un courant (I) d'alimentation lui appartenant,
- dans lequel le module périphérique a une unité (7) de commande, qui peut faire fonctionner le module périphérique, au moins dans un fonctionnement normal, un fonctionnement de contrôle, un fonctionnement d'alerte et une fonctionnement d'étalonnage,
- dans lequel l'unité (7) de commande fait fonctionner le module périphérique de manière à ce que le potentiel (U) d'alimentation soit, dans le fonctionnement normal, une valeur (U+) de tension de base et, lié à cela, le courant (I) d'alimentation, une valeur (I0) de courant de base ;
- dans lequel l'unité (7) de commande fait passer le module périphérique, de temps à autre, du fonctionnement normal au fonctionnement de contrôle,
- dans lequel l'unité (7) de commande, dans le fonctionnement de contrôle
-- par commande d'un dispositif (15) de coupure, monté en amont de la borne (8) au sein du module (3) périphérique, modifie, pendant un laps de temps (T1) valable d'une manière définie, le potentiel (U) d'alimentation, en le faisant passer de la valeur (U+) de tension de base à une valeur (U-) de tension modifiée,
-- contrôle si après l'expiration du laps de temps (T1) défini, une variation escomptée par la modification du potentiel (U) d'alimentation s'est produite,
-- si la variation escomptée s'est produite, repasse en fonctionnement normal et
-- si la variation escomptée ne s'est pas produite, passe dans un fonctionnement d'alerte,
- dans lequel l'unité (7) de commande envoie, dans le fonctionnement d'alerte, un message (M') d'alerte à une unité (2) centrale de l'automate programmable et/ou, par l'intermédiaire de sortie (8) du module (3) périphérique, met, dans un état sécurisé, des actionneur (6) connectés au module (3) périphérique,
- dans lequel l'unité (7) de commande fait, dans le cadre de la mise en service du module périphérique, fonctionner le module périphérique, d'abord dans le fonctionnement d'étalonnage avant le fonctionnement normal,
**caractérisé**
**en ce que** l'unité (7) de commande, dans le fonctionnement d'étalonnage
- envoie d'abord la valeur (U+) de tension de base à la borne (8) par l'intermédiaire du dispositif (15) de coupure,
- immédiatement, à un instant (T4) de début, fait passer le potentiel (U) d'alimentation à la valeur (U-) modifiée et détecte un instant (T5) de réaction, où la variation escomptée se produit, et
- finalement, en utilisant l'instant (T4) de début et l'instant (T5) de réaction, détermine le laps de temps (T1) valable.

9. Module périphérique suivant la revendication 8,
**caractérisé**
- **en ce que** l'unité (7) de commande détecte, au moins dans le fonctionnement de contrôle, le potentiel (U) d'alimentation et/ou le courant (I) d'alimentation et
- **en ce que** la variation escomptée est une variation du potentiel (U) d'alimentation et/ou du courant (I) d'alimentation.

10. Module périphérique suivant la revendication 8,
**caractérisé**
- **en ce que** le module (3) périphérique reçoit, par l'intermédiaire d'au moins une autre borne (11), au moins dans le fonctionnement de contrôle, un état (Z) de l'unité (4, 6) sur site et
- **en ce que** la variation escomptée est une variation de l'état (Z) de l'unité (4, 6) sur site.

11. Module périphérique suivant la revendication 9 ou 10,
**caractérisé**
**en ce que** l'unité (4, 6) sur site est constituée sous la forme d'un actionneur (6) ou sous la forme d'un capteur (4).

12. Module périphérique suivant la revendication 8,
caractérisé
**caractérisé**
- **en ce que** l'unité (4, 6) sur site est constituée sous la forme d'un actionneur (6),
- **en ce que** le module (3) périphérique envoie à l'unité (6) sur site un autre potentiel (U') d'alimentation par l'intermédiaire d'une autre borne (12) du module (3) périphérique, de manière à ce que le courant (I) d'alimentation, envoyé à l'unité (6) sur site, soit, par l'intermédiaire de l'autre borne (12), retourné de l'unité (6) sur site au module (3) périphérique et
- **en ce que** la variation escomptée est une variation de l'autre potentiel (U') d'alimentation.

13. Module périphérique suivant l'une des revendications 8 à 12,
**caractérisé**
**en ce que** le module (3) périphérique, dans le fonctionnement d'étalonnage
- effectue plusieurs fois l'envoi de la valeur (U+) de tension de base, la modification du potentiel (U) d'alimentation et la détection de l'instant (T4) de début et de l'instant (T5) de réaction,
- détermine à cet effet, respectivement, un laps de temps (T1') provisoire et
- détermine le laps de temps (T1) valable par exploitation statistique des laps de temps (T1') provisoires.

14. Module périphérique suivant l'une des revendication 8 à 13,
**caractérisé**
**en ce que** l'unité (7) de commande ne détermine, comme valable, le laps de temps (T1) valable seulement si une dispersion des laps de temps (T1') provisoires satisfait une condition déterminée à l'avance, et sinon envoie un message (F) à un dispositif (2) de commande supérieur hiérarchiquement et/ou à un opérateur (18).
